# EUROPÄISCHE PATENTSCHRIFT

(11) **EP 2 584 946 B1**
(45) Veröffentlichungstag und Bekanntmachung des Hinweises auf die Patenterteilung: **26.11.2014**
(21) Anmeldenummer: 11797637.3
(22) Anmeldetag: 21.06.2011
(51) Int. Cl.: A47J 31/60

(54) **REINIGUNGSSYSTEM FÜR EINEN GETRÄNKEAUTOMATEN, VORZUGSWEISE EINE KAFFEEMASCHINE**
CLEANING SYSTEM FOR A BEVERAGE MACHINE, PREFERABLY A COFFEE MACHINE
SYSTÈME DE NETTOYAGE POUR UN DISTRIBUTEUR AUTOMATIQUE DE BOISSONS, DE PRÉFÉRENCE POUR UNE MACHINE À CAFÉ

(30) Priorität: 24.06.2010 CH 10312010
(43) Veröffentlichungstag der Anmeldung: 01.05.2013
(73) Patentinhaber: Eversys Holding SA, 1957 Ardon (CH)
(72) Erfinder: SIERRO, Dominique, CH-1982 Euseigne (CH); RIMPL, Frank, CH-8592 Sion (CH); IN-ALBON, Jean-Paul, CH-1957 Ardon (CH); IN-ALBON, Bernhard, CH-1958 Uvrier (CH); BRUTTIN, Hubert, CH-3978 Flanthey (CH)
(86) Internationale Anmeldenummer: PCT/EP2011/003064
(87) Internationale Veröffentlichungsnummer: WO 2011/160817

(56) Entgegenhaltungen:
- EP-A1- 1 210 894
- EP-A1- 2 078 481
- US-A1- 2009 293 733

## Beschreibung

Die Erfindung betrifft ein Reinigungssystem für einen Getränkeautomaten, vorzugsweise eine Kaffeemaschine, zur Erzeugung von Kaffee oder kaffeehaltigen Getränken, Milch, Milchschaum oder ähnliches, mit einer Reinigungseinrichtung zum periodischen Reinigen der mit den Getränken in Kontakt tretenden Bauteilen mit einer Reinigungsflüssigkeit, die darin aufgelöste Reinigungsmittel beinhaltet.

Ein derartiges Reinigungssystem dient dazu, sowohl während des Betriebs als auch nach Ausserbetriebnahme der Maschine die kaffee- und milchführenden Bauteile von sich darin absetzenden oder anbackenden Produktresten und anderen Unreinheiten zu befreien, und dafür zu sorgen, dass die Maschine stets unter einwandfrei hygienischen Bedingungen arbeitet.

Bei den bisher bekannten Reinigungssystemen dieser Art ist es von Nachteil, dass sie keine automatische Anpassung der Reinigungsleistung an die jeweiligen Betriebsbedingungen ermöglichen.

In der Druckschrift US-A-2009/0293733 ist eine automatische Reinigung insbesondere in Abhängigkeit der Zeit mittels einer Uhr vorgesehen. Es werden dabei Reinigungsmittel vorwiegend als Konzentrat mit Wasser mit bestimmten Proportionen gemixt und dann durch die Leitungen geführt. Eine solche Reinigungseinrichtung ist relativ aufwändig.

Bei der andern Entgegenhaltung EP-A-1 210 894 ist bei einer Getränkemaschine eine Dosiereinrichtung für das Reinigungsmittel vorgesehen, bei welcher auch Reinigungsmittel in Form von Granulat oder kleiner Tabletten zugeführt werden können, die in einem Vorratsbehälter aufgenommen sind. Mittels eines Dosierrades wird das Reinigungsmittel portionenweise in Dosierkammern an seinem Umfang verteilt gefüllt und dann durch eine Auslassöffnung weitergeleitet. Ferner ist ein Sensor in Form einer Lichtschranke vorgesehen, mittels dem festgestellt werden kann, ob sich im Auslauf Reinigungsmittel befindet.

Der Erfindung liegt die Aufgabe zugrunde, diese Nachteile zu vermeiden und ein Reinigungssystem der eingangs genannten Art zu schaffen, mit dem die Reinigung der Maschine in allen Betriebsphasen vollautomatisch mit einer jeweils optimierten Reinigungsleistung durchführbar ist.

Diese Aufgabe wird durch ein Reinigungssystem gemäß Anspruch 1 gelöst, wobei die Reinigungseinrichtung mit einer zeit- und oder produktzyklenabhängigen Steuerung sowie einer mit ihr zusammenwirkenden Dosiervorrichtung für die Reinigungsmittel versehen ist. Dadurch ist es möglich, den Reinigungsvorgang je nach Betriebsweise individuell zu programmieren und ihn gemäss dem Programm vollautomatisch durchzuführen. Dabei wird die Reinigungsleistung durch die programmgemässe Dosierung der Reinigungsmittel so gesteuert, dass sie eine stets optimale Reinigungswirkung und einen sparsamen Verbrauch an Reinigungsflüssigkeit und auch an Reinigungsmitteln sicherstellt.

Die Erfindung sieht ferner vor, dass die Reinigungsmittel kugel- oder tablettenförmig sind, wodurch sich eine einfache und sichere Handhabung des Reinigungsmittels ergibt. Weiter ist eine Dosiervorrichtung mit einer vorzugsweise elektronisch überwachten Dosierschranke vorgesehen, welche die Reinigungskugeln oder -tabletten im Zusammenwirken mit der zeit- und oder produktzyklenabhängigen Steuerung freigibt.

Da die Reinigungskugeln oder -tabletten eine genau definierte Menge an Reinigungswirkstoffen enthalten, entspricht die Anzahl freigegebener Kugeln oder Tabletten genau der Reinigungsmittelmenge, die für die jeweilige Betriebsweise optimal ist. Dadurch ist es möglich, die Wirkstoffkonzentration der Reinigungsflüssigkeit automatisch zu optimieren.

Hierbei ist es im Sinne einer verzögerungsfreien Arbeitsweise der Vorrichtung von Vorteil, wenn die Dosierschranke durch eine Lichtschranke oder einen Mikroschalter überwacht wird.

Die Erfindung sieht ebenfalls vor, dass die Dosiervorrichtung mit einem Vorratsbehälter und einem Abgabeschacht mit einer Dosieröffnung für die Reinigungskugeln oder -tabletten versehen ist, wobei zwischen dem Vorratsbehälter und dem Abgabeschacht zwei gegenläufig angetriebene Dosierschnecken angeordnet sind, durch welche die Reinigungskugeln oder -tabletten einzeln in den Abgabeschacht befördert werden. Somit wird die Entnahme und Beförderung der Kugeln oder Tabletten aus dem Vorratsbehälter zum Abgabeschacht mit wenigen beweglichen Bauteilen bewerkstelligt.

Es ist auch möglich, dass die Verpackung der Reinigungskugeln oder -tabletten gleichzeitig als Vorratsbehälter genutzt wird.

Es ist hierbei für eine genaue Dosierung vorteilhaft, wenn das Dosiervolumen zwischen den beiden Dosierschnecken so bemessen ist, dass pro Umdrehung nur eine Kugel oder Tablette durch die Dosieröffnung des Abgabeschachtes befördert wird.

Im Sinne eines konstruktiv einfachen Aufbaus ist es gemäss der Erfindung vorgesehen, dass der Vorratsbehälter mit einem offenen Boden und einem abnehmbaren Deckel versehen ist, und unterseitig ein daran befestigtes Gehäuse mit den beiden Dosierschnecken aufweist, an dem der Abgabeschacht mit der Dosierschranke angeflanscht ist.

Der Antriebsmotor für die Dosierschnecken weist zweckmässigerweise eine zwischen diesen stirnseitig angeordnete Zylinderschnecke auf, durch welche beide Dosierschnecken gegenläufig drehbar sind.

Es ist auch zwecks einer montagefreundlichen Bauweise von Vorteil, wenn der Vorratsbehälter vorzugsweise am vom Antriebsmotor abgekehrten Ende der Dosierschnecken mit einem Steckerteil für einen mit ihm korrespondierenden Steckerteil der Steuerungseinrichtung versehen ist.

Die Erfindung wird nachfolgend anhand eines Ausführungsbeispiels unter Bezugnahme auf die Zeichnung näher erläutert.

Es zeigen:
- Fig. 1: eine Dosiervorrichtung für das erfindungsgemässe Reinigungssystem, perspektivisch dargestellt,
- Fig. 2: die Dosiervorrichtung aus Fig. 1, im Querschnitt dargestellt,
- Fig. 3: die Dosiervorrichtung aus Fig. 1, im Längsschnitt dargestellt, und
- Fig. 4: eine Einzelheit der Dosiervorrichtung aus Fig. 1, in der Draufsicht dargestellt.

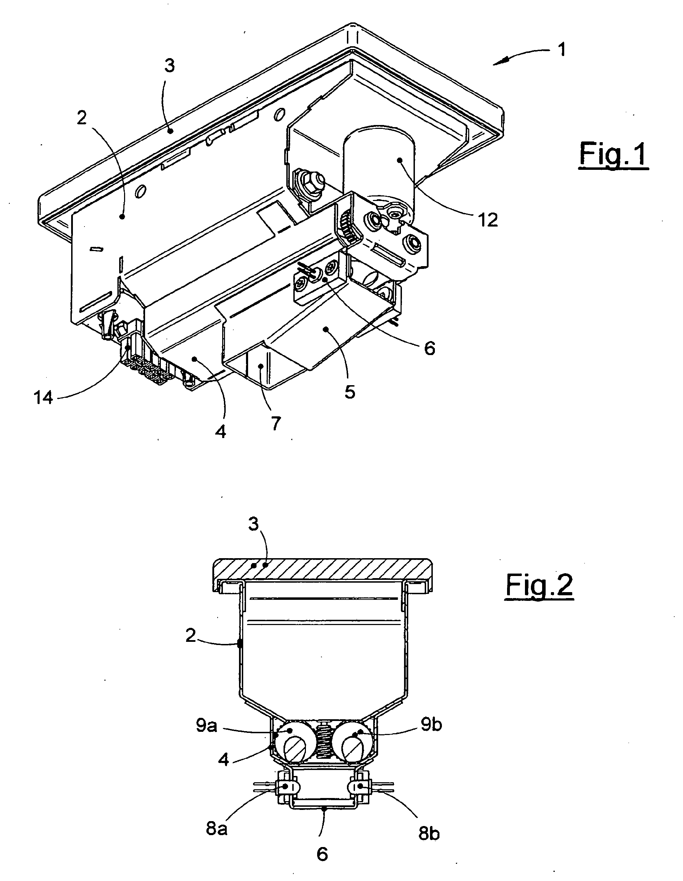

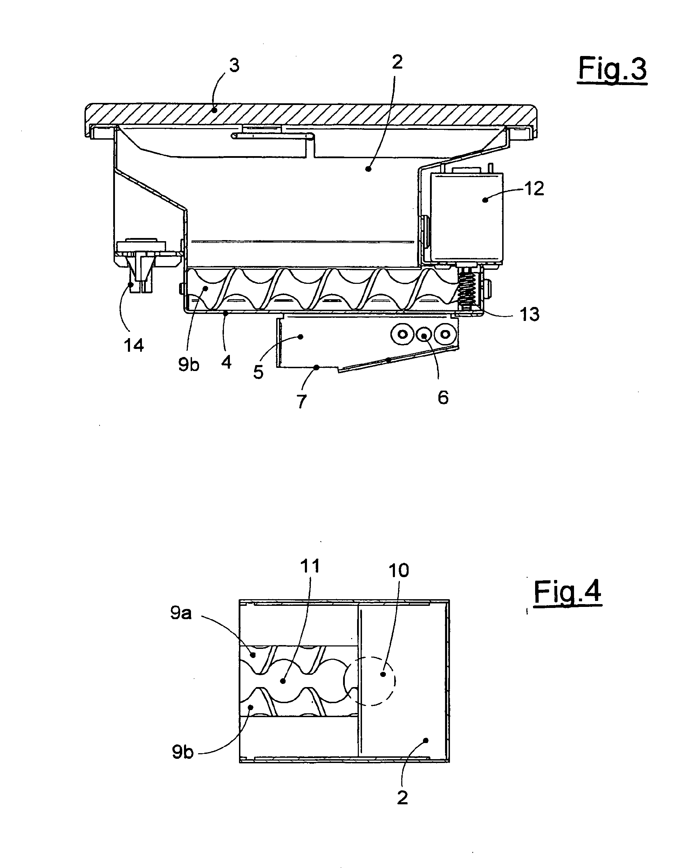

Die in Fig. 1 bis Fig. 4 dargestellte Dosiervorrichtung 1 weist einen Vorratsbehälter 2 auf, der mit einem leicht abnehmbaren Deckel 3 versehen ist und an dem ein Gehäuse 4 mit einem Abgabeschacht 5 befestigt ist. Im Abgabeschacht 5 sind eine Dosierschranke 6 und eine Dosieröffnung 7 angeordnet. Die Dosierschranke 6 ist elektronisch durch eine Lichtschranke 8a, 8b betätigbar. Sie kann auch mittels eines Mikroschalters betätigt werden.

Die Dosiervorrichtung 1 ist zum Dosieren von kugelförmigen Reinigungsmitteln ausgelegt. Die Reinigungskugeln 10 sind im Vorratsbehälter 2 aufbewahrt. Zum Nachfüllen des Behälters ist der aufgesetzte Deckel 3 leicht entfernbar.

Im Gehäuse 4 sind zwei parallel zueinander liegende Dosierschnecken 9a, 9b angeordnet, welche dazu dienen, die Reinigungskugeln 10 in ihren Zwischenräumen 11 aufzunehmen und zum Abgabeschacht 5 zu transportieren. Hierfür werden die Dosierschnecken 9a, 9b stirnseitig durch einen Elektromotor 12 mit einer Zylinderschnecke 13 angetrieben, durch welche die Dosierschnecken 9a, 9b gegenläufig drehbar sind. Bei diesen ist das Dosiervolumen der Zwischenräume 11 so bemessen, dass pro Umdrehung nur eine Reinigungskugel durch die Dosieröffnung 7 befördert wird. Da alle Reinigungskugeln exakt die gleiche Menge Wirkstoffe beinhalten, kann auf diese Weise die der Reinigungsflüssigkeit jeweils zugeführte Menge an Reinigungsmitteln exakt anhand der Anzahl abgegebener Kugeln dosiert werden.

Diese Anzahl wird mechanisch, elektromagnetisch oder elektronisch mit Hilfe einer zeit- und produktzyklenabhängig arbeitenden Steuerung der Reinigungseinrichtung definiert und gezählt. Da eine solche Steuerung sich sonst aus allgemein bekannten Steuermitteln wie Betätigungs- und Programmiertasten, Sensoren, Schaltern und ähnlichen Elementen zusammensetzt, erübrigt es sich, auf sie näher einzugehen.

Die Bedienungselemente der Steuerung sind üblicherweise in einem gut zugänglichen und übersichtlichen Bedienungspanel der Kaffeemaschine untergebracht. Die Steuerleitungen für die Dosiervorrichtung 1 werden in einem Steckerteil zusammengeführt, der mit einem Steckerteil 14 der Dosiervorrichtung 1 korrespondiert. Dieser ist ebenfalls gut zugänglich am vom Antriebsmotor 12 abgekehrten Ende der Dosierschnecken 9a, 9b untergebracht. Durch die Anbindung der Dosiervorrichtung an die Steuereinrichtung mit Hilfe des Steckteils 14 wird der Ein- und Ausbau der Vorrichtung sehr erleichtert.

Die Dosiervorrichtung 1 bildet eine kompakte und raumsparende Baueinheit, die auch leicht in vorhandene Kaffeemaschinen einbaubar ist. Es ist ebenfalls möglich, getrennte Dosiervorrichtungen für die kaffeeführenden Bauteile und für die milchführenden Bauteile vorzusehen.

Es ist auch im Rahmen der Erfindung ohne weiteres möglich, als Reinigungsmittel Tabletten anstelle von Kugeln zu verwenden, wobei in beiden Fällen die Dosierung derselben auch durch einen Hubmagneten erfolgen kann.

Durch die Verwendung von Dosierschnecken mit dem jeweils entsprechenden Zwischenraum ist es ferner möglich, Reinigungskugeln oder -tabletten mit unterschiedlichen Grössen einzusetzen. Selbstverständlich sind auch unterschiedlich zusammengesetzte Reinigungskugeln oder -tabletten einsetzbar.

## Patentansprüche

1. Reinigungssystem für einen Getränkeautomaten, vorzugsweise eine Kaffeemaschine, zur Erzeugung von Kaffee oder kaffeehaltigen Getränken, Milch, Milchschaum oder ähnliches, mit einer Reinigungseinrichtung zum periodischen Reinigen der mit den Getränken in Kontakt tretenden Bauteilen, mit einer Reinigungsflüssigkeit, die darin aufgelöste Reinigungsmittel beinhaltet, **dadurch gekennzeichnet, dass**
die Reinigungseinrichtung mit einer zeit- und/oder produktzyklenabhängigen Steuerung sowie einer mit dieser zusammenwirkenden Dosiervorrichtung (1) für die Reinigungsmittel (10) versehen ist, wobei die Reinigungsmittel (10) kugel- oder tablettenförmig sind und die Dosiervorrichtung (1) mit einer vorzugsweise elektronisch überwachten Dosierschranke (6) versehen ist, welche die Reinigungskugeln oder -tabletten (10) im Zusammenwirken mit der Steuerung freigibt, wobei die Dosiervorrichtung (1) mit einem Vorratsbehälter (2) und einem Abgabeschacht (5) mit einer Dosieröffnung (7) für die Reinigungskugeln oder -tabletten (10) versehen ist, wobei zwischen dem Vorratsbehälter und dem Abgabeschacht zwei gegenläufig angetriebene Dosierschnecken (9a, 9b) angeordnet sind, durch welche die Reinigungskugeln oder - tabletten (10) einzeln in den Abgabeschacht (5) befördert werden.

2. Reinigungssystem nach Anspruch 1,
**dadurch gekennzeichnet, dass**
die Dosierschranke (6) durch eine Lichtschranke (8a, 8b) oder einen Mikroschalter überwacht wird.

3. Reinigungssystem nach Anspruch 1,
**dadurch gekennzeichnet, dass**
das Dosiervolumen (11) zwischen den beiden Dosierschnecken (9a, 9b) so bemessen ist, dass eine definierte Anzahl Reinigungskugeln oder -tabletten (10) pro Umdrehung durch die Dosieröffnung (7) des Abgabeschachtes (5) beförderbar ist.

4. Reinigungssystem nach Anspruch 1,
**dadurch gekennzeichnet, dass**
der Vorratsbehälter (2) mit einem offenen Boden und einem abnehmbaren Deckel (3) versehen ist, und unterseitig ein daran befestigtes Gehäuse (4) mit den beiden Dosierschnecken (9a, 9b) aufweist, an dem der Abgabeschacht (5) mit der Dosierschranke (6) angeflanscht ist.

5. Reinigungssystem nach Anspruch 4,
**dadurch gekennzeichnet, dass**
der Antriebsmotor (12) für die Dosierschnecken (9a, 9b) mit einer zwischen diesen stirnseitig angeordneten Zylinderschnecke (13) versehen ist, durch welche beiden Dosierschnecken gegenläufig drehbar sind.

6. Reinigungssystem nach Anspruch 5,
**dadurch gekennzeichnet, dass**
der Vorratsbehälter (2) vorzugsweise am vom Antriebsmotor (12) abgekehrten Ende der Dosierschnecken (9a, 9b) mit einem Steckerteil (14) für einen mit ihm korrespondienenden Steckerteil der Steuerungseinrichtung versehen ist.

7. Reinigungssystem nach einem der vorhergehenden Ansprüche 1 bis 6,
**dadurch gekennzeichnet**, däss
die Verpackung der Reinigungstabletten oder -kugeln gleichzeitig als Vorratsbehälter genutzt werden kann und/oder der Mechanismus zur Dosierung oder Teile davon bereits in diese integriert ist.

## Claims

1. Cleaning system for a beverage machine, preferably a coffee machine, for producing coffee and drinks containing coffee, milk, milk froth or the like, comprising a cleaning device for periodically cleaning the components coming into contact with the drinks with a cleaning liquid which contains cleaning agent dissolved therein, **characterised in that** the cleaning device is provided with a time- and/or product-cycle-dependent controller as well as a metering apparatus (1) for the cleaning agents (10) are in the form of balls or tablets, and the metering apparatus (1) is provided with a preferably electronically monitored metering cabinet (6), which releases the cleaning balls or tablets (10) by interacting with the metering apparatus (1) is provided with a storage container (2) and a dispensing chute (5) comprising a metering opening (7) for the cleaning balls or tablets (10), there being positioned between the storage container and the dispensing chute two metering screws (9a, 9b) driven in opposite directions by means of which the cleaning balls or tablets (10) are conveyed individually into the dispensing chute (5).

2. Cleaning system according to Claim 1,
**characterised in that**
the metering cabinet (6) is monitored by a light barrier (8a, 8b) or a microswitch.

3. Cleaning system according to Claim 1,
**characterised in that**
the metering volume (11) is measured between the two metering screws (9a, 9b) such that a defined number of cleaning balls or tablets (10) can be conveyed through the metering opening (7) of the dispensing chute (5) for each turn.

4. Cleaning system according to Claim 1,
**characterised in that**
the storage container (2) is provided with an open bottom and a removeable cover (3), and has on the lower side a housing (4) fastened to the latter with the two metering screws (9a, 9b), on which the dispensing chute (5) with the metering cabinet (6) is flange-mounted.

5. Cleaning system according to Claim 4,
**characterised in that**
the drive motor (12) for the metering screws (9a, 9b) is provided with a cylindrical worm (13) positioned between the latter on the face side by means of which the two metering screws can be turned in opposite directions.

6. Cleaning system according to Claim 5,
**characterised in that**
the storage container (2) is preferably provided on the end of the metering screws (9a, 9b) facing away from the drive motor (12) with a plug part (14) for a plug part, corresponding to the latter, of the control device.

7. Cleaning system according to any of the preceding Claims 1 to 6, **characterised in that**
the packaging of the cleaning tablets or balls can be used at the same time as the storage container and/or the mechanism for metering or parts of the latter is already integrated into the packaging.

## Revendications

1. Système de nettoyage d'un distributeur automatique de boissons, de préférence d'une machine à café, pour la production de café ou de boissons contenant du café, du lait, de la mousse de lait ou analogue, comprenant un dispositif de nettoyage pour nettoyer périodiquement les pièces entrant en contact avec les boissons, comprenant un liquide de nettoyage, qui contient des agents de nettoyage qui y sont dissous, **caractérisé en ce que**
le dispositif de nettoyage est pourvu d'une commande qui dépend du temps et/ou des cycles de produit, ainsi que d'un dispositif (1) d'addition dosée des agents (10) de nettoyage, coopérant avec celle-ci, les agents (10) de nettoyage étant sous la forme de billes ou de comprimés et le dispositif (1) d'addition dosée étant pourvu d'une barrière (6) d'addition dosée, contrôlée de préférence électroniquement, qui libère les billes ou les comprimés (10) de nettoyage en coopération avec la commande, le dispositif (1) de dosage étant pourvu d'un réservoir (2) et d'un puits (5) de distribution, ayant une ouverture (7) d'addition dosée des billes ou des comprimés (10) de nettoyage, dans lequel il est disposé entre le réservoir et le puits de distribution deux vis (9a, 9b) d'addition dosée entraînées en sens contraire, par lesquelles les billes ou les comprimés (10) de nettoyage sont transportés individuellement dans le puits (5) de distribution.

2. Système de nettoyage suivant la revendication 1, **caractérisé en ce que**
la barrière (6) d'addition dosée est contrôlée par une cellule (8a, 8b) photoélectrique ou par un microinterrupteur.

3. Système de nettoyage suivant la revendication 1, **caractérisé en ce que**
le volume (11) d'addition dosée entre les deux vis (9a, 9b) d'addition dosée est tel qu'un nombre défini de billes ou de comprimés (10) de nettoyage peut être transporté par tour par l'ouverture (7) d'addition dosée du puits (5) de distribution.

4. Système de nettoyage suivant la revendication 1, **caractérisé en ce que**
le réservoir (2) est pourvu d'un fond ouvert et d'un couvercle (3), qui peut être retiré et a, du côté inférieur, un carter (4) qui y est fixé, qui a les deux vis (9a, 9b) d'addition dosée et auquel le puits (5) de distribution ayant la barrière (6) d'addition dosée est bridé.

5. Système de nettoyage suivant la revendication 4, **caractérisé en ce que** le moteur (12) d'entraînement des vis (9a, 9b) d'addition dosée est pourvu d'une vis (13) cylindrique, disposée du côté frontal entre eux et par laquelle les deux vis d'addition dosée peuvent tourner en sens contraire.

6. Système de nettoyage suivant la revendication 5, **caractérisé en ce que**
le réservoir (2) est pourvu de préférence à l'extrémité, éloignée du moteur (12) d'entraînement, des vis (9a, 9b) d'addition dosée, d'une pièce (14) formant connecteur pour une pièce formant connecteur qui lui correspond du dispositif de commande.

7. Système de nettoyage suivant l'une des revendications précédentes 1 à 6,
**caractérisé en ce que**
l'emballage des comprimés ou des billes de nettoyage peut être utilisé en même temps comme réservoir et/ou le mécanisme d'addition dosée ou des pièces de celui-ci y est déjà intégré.
